# EUROPEAN PATENT APPLICATION

(11) **EP 1 158 109 A2**
(43) Date of publication of application: **28.11.2001**
(21) Application number: 01111800.7
(22) Date of filing: 16.05.2001
(51) Int. Cl.: E04B 1/80, E04B 1/94

(54) **Fire resistant board material**

(30) Priority: 26.05.2000 GB 0012845
(71) Applicant: Lancaster Fibre Technology Group Ltd., Lancaster LA1 5QP (GB)
(72) Inventor: Bowman, John Oliver, Scotforth, Lancaster, Lancs LA1 2 NL (GB); Taylor, Rodney, Evesham, Worcester WR11 6lf (GB)
(74) Representative: Walsh, David Patrick

(57) **Abstract**

The present invention relates to a fire resistant material and, in particular a fire resistant panel for use on vessels such as ships where lightweight materials are required. The fire resistant material includes a matrix of basalt mineral fibres and glass fibres. Each of the types of fibres are substantially uniformly distributed throughout the material, preferably, a panel. The relative size of the basalt fibres and glass fibres is such that the glass fibres are smaller than the basalt fibres and are interspersed between the basalt fibres in the matrix. A method for the production of a fire resistant composite material according to the invention is also described.

## Description

The present invention relates to a fire resistant material and, in particular, but not exclusively, a fire resistant panel for use on vessels where lightweight materials are required. In many applications, fire resistant panels have come in the form of ceramic boards. Ceramic boards had good fire resistant properties. Recently, ceramic materials have been classified as grade II carcinogens. As a result, suitable replacements for ceramic boards have been sought. Calcium silicate boards comprise a very dense material (typically 640kg/m³) with fire resistant properties and have been utilised for some applications. However, as such boards are very heavy, they are not suitable for numerous applications including shipping applications where lightweight materials are essential.

Phenolic resins mixed with mineral wool have been used for fire resistant applications but it is necessary to apply an ablative coat or other high temperature paint to give the required fire resistant properties. Furthermore, such materials do not have satisfactory acoustic characteristics and have not been used widely.

Basalt mineral fibre has excellent thermal and acoustic properties but has not hitherto been used for fire resistant materials due to its tendency to crack or fracture above its crystallisation point.

It is one of the objects of the present invention to provide an alternative fire resistant panel.

According to a first aspect of the present invention there is provided a fire resistant material comprising a matrix of basalt mineral fibres and glass fibres, each of the said types of fibres being substantially uniformly distributed throughout the panel, the relative size of the basalt fibres and glass fibres being such that the glass fibres are smaller than the basalt fibres and are interspersed between the basalt fibres in the matrix.

Preferably, the glass fibre has a size suitable for pulping with the basalt fibre. Preferably, the average thickness of the glass fibre is between 0.1-20µm, more preferably, 0.5-10µm, most preferably 2-5µm. Especially preferred is an average thickness of 3-4µm.

Preferably, the average length of the glass fibres is between 0.1-10mm, more preferably 0.2-5mm, most preferably 0.5-2mm. Especially preferred is an average length of 0.75-1.25mm.

Preferably, the basalt fibres are of a size suitable for pulping with the glass fibres. Preferably, the average thickness of the basalt fibres is 0.1µm-100µm, more preferably 0.2-50µm, most preferably 6-30µm. Especially preferred is an average thickness range of 10-20µm.

Preferably, the average length of the basalt fibres is between 1-50mm, more preferably 5-30mm, most preferably 10-25mm. Especially preferred is an average length of 15-20mm.
Preferably, the material is in a rigid form such as a panel or board.

Preferably, the basalt fibre is present in the panel at a range of 10-90% w/w, more preferably 50-85% w/w, most preferably 60-80 w/w. An especially preferred range for the basalt fibre is between 65-75% w/w of the panel.

Preferably the glass fibre is present at a level of 5-50% w/w of the panel, more preferably, 10-40% w/w of the panel, most preferably 20-35% w/w of the panel. An especially preferred range for the glass fibre is between 25-30% w/w of the panel.

Preferably, an inorganic binder is also present in the matrix. A suitable inorganic binder is colloidal silica. Preferably, the inorganic binder is present at a level of 25% w/w of the panel, more preferably up to 20% w/w of the panel, most preferably up to 15% w/w of the panel. An especially preferred level for the inorganic binder is at a range between 8-10% w/w of the panel.

A small amount of organic binder may also be added as a stabiliser during the reduction of the panel, especially during the pulping process. Preferably, the organic binder is present at a level of up to 5% w/w of the panel, more preferably up to 3%, most preferably up to 2% w/w of the panel.

According to a second aspect of the present invention there is provided a method for the production of a fire resistant composite material according to the first aspect of the present invention comprising the step of:
a) pulping a mixture of basalt mineral fibres and glass fibres.

Preferably, the method includes a further step of;
b) wet forming a panel from the pulped material.

Preferably, the basalt mineral fibres and glass fibres are mechanically shredded to pulpable consistency prior to step (a) . Preferably, the fibres are separately mechanically shredded.

Preferably, an organic binder or stabiliser is added to the pulping mixture.

Preferably, an inorganic binder is added to the pulping mixture.

Preferably, the glass fibre has a softening point below the crystallisation point or sintering point of the basalt mineral fibre. Preferably, the glass fibre has a softening point less than 200°C below the crystallisation point of basalt mineral fibre, more preferably, less than 100°C below the crystallisation point of basalt mineral fibre, most preferably less than 80°C below the crystallisation point of basalt mineral fibre. Preferably, the glass fibre has a melting point above the crystallisation point of the basalt mineral fibre. A suitable glass fibre material for the invention is E-glass fibre. C-glass may also be utilised. The C-glass may also be mixed with E-glass as a component thereof. Alternatively, a glass fibre with high body solubility may be used to replace E-glass or, preferably, as a minor component thereof. An example of such a glass is a high alkali glass.

Preferably, the softening point of the glass fibre is between 700-850°C, more preferably between 750-820°C. Especially preferred is glass fibre softening point below the crystallisation point of basalt mineral fibre. Advantageously, by using glass fibre having a softening point below and close to the basalt crystallisation point, fracturing and cracking of the material is avoided as the glass fibre gives additional flexibility to the material after it has reached its softening point. The uniform interspersion of the glass fibre between the basalt fibres throughout the matrix and the attainment of the softening point of the glass fibres appears to prevent the basalt fibres from cracking and fracturing after they have reached their crystallisation/sintering point. The mechanism is not entirely known but the glass fibres may be behaving in a plastic manner over the sintering temperature of the basalt. This causes a tough but less brittle coating to form above 800°C which retards heat transfer through the material and provides further protection against the fire front. Furthermore, the material behaves in a similar way as the heat progresses through the material thus significantly improving the lifetime and efficiency of a board during a fire. An additional advantage is the absorption of heat by the glass fibres as they reach their softening point which further enhances the ability of the material to absorb heat during a fire. Applications for the material include use in fire doors, wall panels, ceiling panels and other locations where fire retardance is necessary. It is also possible to apply coatings or further layers to a panel according to the required user properties. For instance, a cosmetic facing for acoustic capability may be located on one side of a panel which will simply burn away during a fire so that the fire retardant properties of the panel may be utilised.

In order to avoid cracking or fracturing of a board, it is important that the glass fibres are uniformly distributed between the basalt fibres. In this regard, it has been found that the pulping process causes flotation of the fibres and by suitable mixing and agitation, it is possible to achieve an even distribution of the glass fibres throughout the basalt fibre matrix.

Advantageously, the choice of components for the fire resistant material also provides thermal insulation and acoustic properties. Additionally, preferably, a panel of the material has a planar surface. Advantageously, a planar surface is suitable for lamination on one or both sides with a variety of coatings, including rigid materials such as formica or acoustically transparent perforated metal sheet.

A further advantage of the invention is the potential to replace materials which include organic resins and/or retractory ceramic fibres and yet still maintain a relatively low density material compared with replacement prior art products such as calcium silica board.

The invention will now be described with reference to the accompanying non-limiting examples and test results and, by way of example, the accompanying drawings in which:-
Figure 1 shows a panel according to the invention with an exploded inset showing the distribution of fibres;
Figure 2 shows a thermal stability profile for the glass fibre component of the present invention;
Figure 3 shows a thermal stability profile for the basalt fibre component of the present invention; and
Figure 4 shows the furnace temperature curve and its effects on a panel in accordance with the invention, basalt fibre and E-glass fibre.

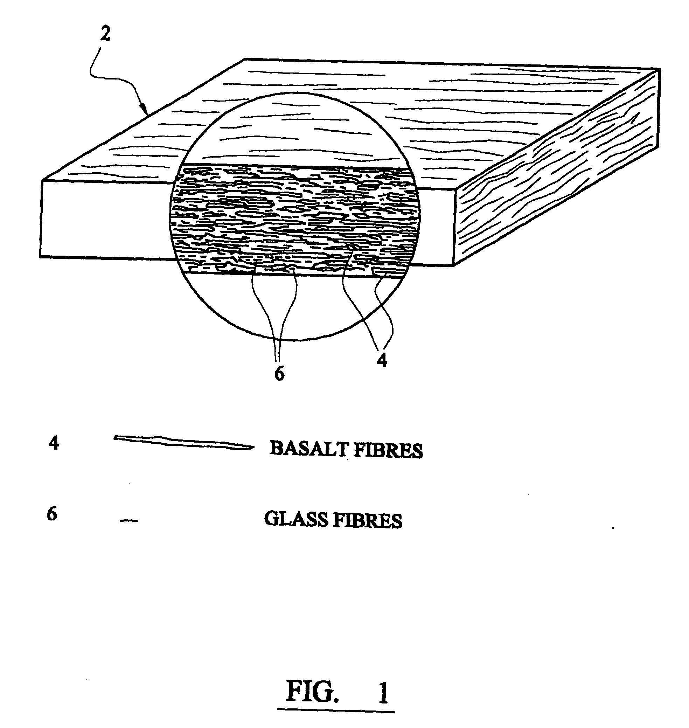

With reference to figure 1, a rectangular solid composite panel 2 of conventional construction cut to have two opposed parallel larger surfaces separated by the thickness of the panel, the ends and sides being cut perpendicular to the said larger surfaces. The panel comprises basalt fibres 4 and glass fibres 6, both types of fibres being uniformly distributed throughout the panel and the glass fibres being interspersed uniformly between the larger basalt fibres. The fibres have been compressed together to form a solid matrix of fibres in the composite panel.

### An example method of manufacture

Long strand basalt mineral fibre (a) and microfine E-glass fibre (b) were separately mechanically shredded before being dry-poured into a pulping tank in a ratio of 70/30 (a/b). A small amount of organic binder (starch) was added as a stabiliser at a level of 1% of the mass of the combined fibres. The fibres were pulped with water at high speed and an inorganic binder (collorial silica) was added at 9% w/w of the mass of the combined fibres. The pulp was discharged into a holding tank and maintained under low speed agitation. Thereafter, the pulp was passed to a forming tank. Low speed agitation was maintained within the forming tank as a panel was produced by wet vacuum assisted deposition of the pulp over a forming tool.

### Thermal Stability Profile

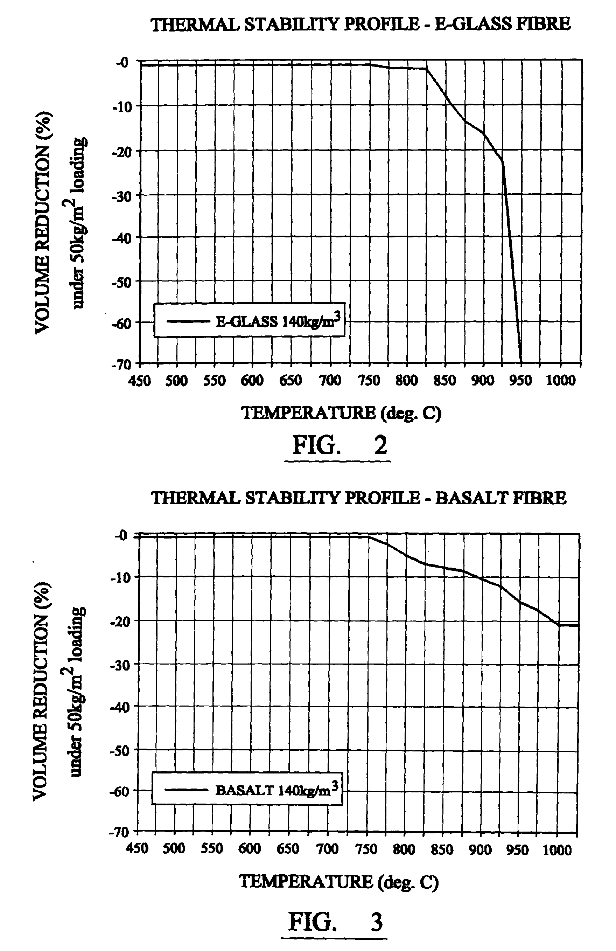

The thermal stability profiles of E-glass fibre and basalt fibre utilised in the above example are shown in figures 2 and 3 respectively. As can be seen from the profile, a softening point of the E-glass has been reached by 775°C but the melting point is not achieved until after 925°C. The area between 850°C and 925°C shows that the E-glass fibre does not yet flow in a molten state at this temperature. In the case of the basalt fibre, the loss of volume under load is evidence of the breaking of fibre length above the crystallisation/sintering temperature of approximately 820°C. Below this temperature, the compressive movement is largely due to the expansion of air from the fibre matrix. A tough flexible skin is noted on the surface of the panel at this temperature.

### Fire Testing

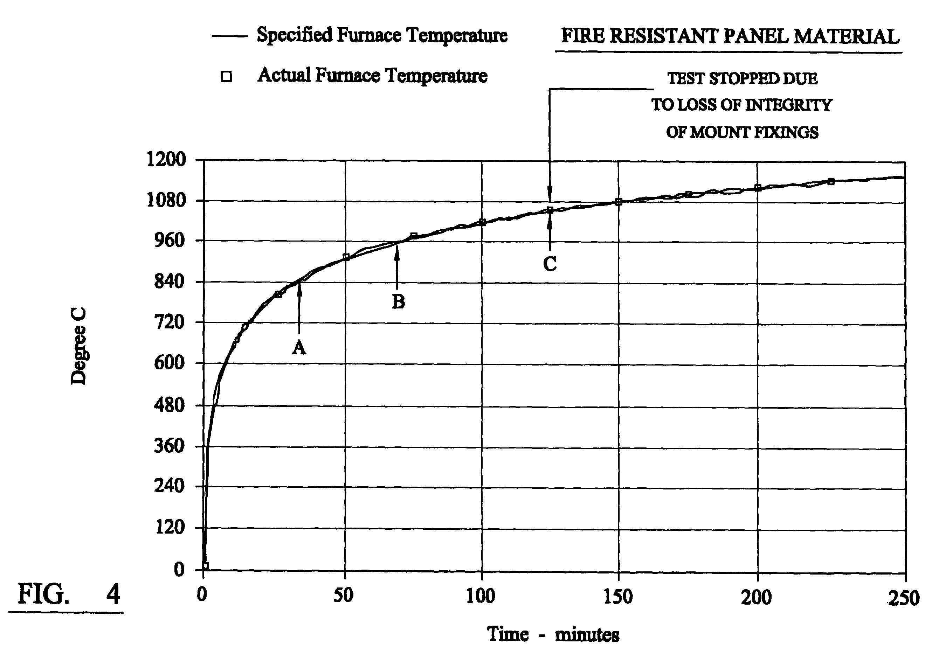

Fire testing of the panel material was carried out utilising the standard furnace temperature curve. The furnace temperature curve applied to the panel and test material is shown in figure 4. The panel followed the furnace temperature curve for a minimum of 2 hours resistance as indicated by C. The test was discontinued after 2 hours because the support frame for the panel failed although the sample material showed no signs of failing after this period. E-glass fibre material subjected to the same temperature curve showed appreciable softening after approximately 30 minutes, A. The basalt material was subjected to the curve and showed, distortion, fissures at the hot face and sintering at around 65-70 minutes, B. The material was also subjected to combustion tests according to IMO Resolution MSC61 (67): Annex 1, Part 1, the product was classified as non-combustible which is a significant advantage.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings) , or to any novel one, or any novel combination, of the steps of any method or process so disclosed.

## Claims

1. A fire resistant material comprising a matrix of basalt mineral fibres and glass fibres, each of the said types of fibres being substantially uniformly distributed throughout the material, the relative size of the basalt fibres and glass fibres being such that the glass fibres are smaller than the basalt fibres and are interspersed between the basalt fibres in the matrix.

2. A fire resistant material according to claim 1, wherein the glass fibre has a size suitable for pulping with the basalt fibre.

3. A fire resistant material according to claim 1 or 2, wherein the average thickness of the glass fibre is between 0.1-20µm.

4. A fire resistant material according to any preceding claim, wherein the average length of the glass fibres is between 0.1-10mm.

5. A fire resistant material according to any preceding claim, wherein the average thickness of the basalt fibres is 0.1µm-100µ.

6. A fire resistant material according to any preceding claim, wherein the average length of the basalt fibres is between 1-50mm.

7. A fire resistant material according to any preceding claim, wherein the material is in a rigid form such as a panel or board.

8. A fire resistant material according to any preceding claim, wherein the basalt fibre is present in the material at a range of 10-90% w/w.

9. A fire resistant material according to any preceding claim, wherein the glass fibre is present at a level of 5-50% w/w of the material.

10. A fire resistant material according to any preceding claim, wherein an inorganic binder is also present in the matrix.

11. A method for the production of a fire resistant composite material according to any of claims 1-10, comprising the step of:
a) pulping a mixture of basalt mineral fibres and glass fibres.

12. A method according to claim 11, wherein the method includes a further step of;
b) wet forming a panel from the pulped material.

13. A method according to any of claims 11 or 12, wherein the basalt mineral fibres and glass fibres are mechanically shredded to pulpable consistency prior to step (a).

14. A method according to any of claims 11-13, wherein the fibres are separately mechanically shredded.

15. A material according to any of claims 1-10, wherein the glass fibre has a softening point below the crystallisation point or sintering point of the basalt mineral fibre.

16. A material according to any of claims 1-10 or 15, wherein the glass fibre has a softening point less than 200°C below the crystallisation point of basalt mineral fibre.

17. A material according to any of claims 1-10 or 15 or 16, wherein the glass fibre has a melting point above the crystallisation point of the basalt mineral fibre.
